# EUROPÄISCHE PATENTSCHRIFT

(11) **EP 0 822 546 B1**
(45) Veröffentlichungstag und Bekanntmachung des Hinweises auf die Patenterteilung: **01.10.2003**
(21) Anmeldenummer: 97810439.6
(22) Anmeldetag: 03.07.1997
(51) Int. Cl.: G11B 7/24

(54) **Speichermedien mit hoher Kapazität**
Storage medium with large capacity
Support d'enregistrement à grande capacité

(30) Priorität: 12.07.1996 CH 175696
(43) Veröffentlichungstag der Anmeldung: 04.02.1998
(73) Patentinhaber: Ciba Specialty Chemicals Holding Inc., 4057 Basel (CH)
(72) Erfinder: Schmidhalter, Beat, 1735 Giffers (CH); Wolleb, Heinz, 1723 Marly (CH); Baumann, Marcus, 4053 Basel (CH)

(56) Entgegenhaltungen:
- EP-A- 0 252 360
- PATENT ABSTRACTS OF JAPAN vol. 014, no. 174 (M-0959), 5.April 1990 & JP 02 029385 A (RICOH CO LTD), 31.Januar 1990,
- PATENT ABSTRACTS OF JAPAN vol. 008, no. 040 (M-278), 21.Februar 1984 & JP 58 197088 A (TDK KK), 16.November 1983,
- PATENT ABSTRACTS OF JAPAN vol. 096, no. 003, 29.März 1996 & JP 07 304257 A (SONY CORP), 21.November 1995,

## Beschreibung

Umfeld der Erfindung ist die optische Informationsspeicherung auf einmal beschriftbaren Speichermedien, wobei die Informationsbits sich durch die unterschiedlichen optischen Eigenschaften eines Farbmittels an beschriebenen und unbeschriebenen Stellen unterscheiden. Diese Technologie wird gewöhnlich als "WORM" bezeichnet (zum Beispiel "CD-R", "SD-R" oder "MMCD-R"); diese Bezeichnungen wurden hier übemommen.

Bei eine Wellenlänge von 770 bis 830 nm beschreibbare Compact Discs sind aus "Optical Data Storage 1989", Technical Digest Series, Vol. 1, 45 (1989) bekannt. Sie werden mit reduzierter Ausleseleistung gelesen. Gemäss Orange Book Standard muss das Medium bei der Aufzeichnungswellenlänge eine Basisreflektivität von 65% und mehr aufweisen. Als Aufzeichnungsmedien können zum Beispiel Cyaninfarbstoffe (JP 58/125 246), Phthalocyanine (EP 676 751, EP 712 904), Azofarbstoffe (US 5 441 844), Doppelsalze (US 4 626 496), Dithioethenmetallkomplexe (JP 63/288 785, JP 63/288 786), Azometallkomplexe (US 5 272 047, US 5 294 471, EP 649 133, EP 649 880) oder Gemische davon (EP 649 884) verwendet werden.

Durch den Einsatz von neueren kompakten, leistungsstarken roten Diodenlaser, die im Bereich von 630 bis 690 nm emittieren, ist prinzipiell eine 5- bis 8-malige Verbesserung der Datenpackdichte möglich, indem der Trackabstand (Distanz zwischen 2 Windungen der Informationsspur) und die Grösse der Bits auf etwa den halben Wert gegenüber der herkömmlichen CD verringert werden können.

Dies stellt jedoch ausserordentlich hohe Anforderungen an die zu verwendende Aufzeichnungsschicht, wie hoher Brechungsindex, optimale Lage der Absorptionsbande sowie insbesondere hohe Lichtstabilität am Tageslicht bei gleichzeitiger hoher Empfindlichkeit gegen energiereiche Laserstrahlung. Die bekannten Aufzeichnungsschichten besitzen diese Eigenschaften nur in unbefriedigendem Masse.

So beschreiben JP 03/127 791, JP 04/120 085 und JP 05/212 968 optische Aufzeichnungsmedien, welche aus einer Polymermatrix und darin inkorporierten, mit vier Arylgruppen substituierten, metallfreien Porphyrinen bestehen.

In EP 344 891 und JP 07/276 804 werden bei 630 bis 700 nm beschriftbare, optische Aufzeichnungsmedien beschrieben, worin die Aufzeichnungsschicht besondere Tetraazaporphyrine mit ankondensierten, N-enthaltenden heteroaromatischen Ringen enthält.

JP 02/238 061 beschreibt grüne, Tetraaryl-substituierte Au, Sn oder Pd-Metallkomplexe von Porphyrin-Derivaten, deren Doppelbindungssystem durch einen sp³-hybridisierten Kohlenstoffatom unterbrochen ist. Diese Verbindungen können für allerlei Zwecke, darunter angeblich auch für optische Aufzeichnungsmedien, verwendet werden.

JP 02/029 385 beschreibt Cu, Ni, Pt, Pd, In, VO oder Ti-Metallkomplexe von mehrfach Oxosubstituierten seco-Porphyrinen, welche in optischen Aufzeichnungsmedien eine hohe Hitzestabilität aufweisen sollen.

Weiter beschreiben JP 07/304 256 und JP 07/304 257 optische Aufzeichnungsmedien, welche aus einer Polymermatrix und darin inkorporierten Porphyrin-Metallkomplexen, als Beispiel Zn-Komplexen, bestehen. Die Aufzeichnung der Information geschieht im Wellenlängenbereich von 400 bis 500 nm, wobei die Empfindlichkeit und die Farbdichte hoch sein sollen.

Schliesslich beschreibt JP 01/174 488 ein optisches Aufzeichnungsmedium, welches biologisch vorkommende Porphyrin-Metallkomplexe wie Chlorophyll, Cytochrome oder Häm enthält. Beispielsweise können auf eine Chlorophyll-Schicht mit einem He-Ne Laser der Intensität 18-19 mW bei 633 nm optische Informationen aufgezeichnet werden. Dieses Aufzeichnungsmedium lässt jedoch insbesondere inbezug auf dessen Empfindlichkeit und dessen zu dicken Farbstoffschicht zu wünschen übrig. Die Beschriftung dieser biologisch vorkommenden Porphyrin-Metallkomplexe hat zudem bei einer Wellenlänge um den Absorptionsmaximum zu erfolgen, und deren Feststoffeigenschaften sind nicht befriedigend genug.

Ziel der Erfindung war die Bereitstellung eines optischen Aufzeichnungsmediums, dessen Aufzeichnungsschicht hohe Speicherkapazität bei hervorragenden sonstigen Eigenschaften besitzt. Dieses Aufzeichnungsmedium sollte bei Wellenlängen von 400 bis 700 nm, insbesondere im Bereich von 600 bis 700 nm sowohl beschriftet als auch gelesen werden können. Hauptmerkmale der erfindungsgemässen Aufzeichnungsschicht sind die sehr hohe Anfangsreflektivität im genannten Wellenlängenbereich der Laserdioden, welche mit hoher Empfindlichkeit geändert werden kann, der hohe Brechungsindex, die hohe Reinheit und die schmale Absorptionsbande im Festzustand, die gute Gleichmässigkeit der Schriftbreite bei unterschiedlichen Pulsdauem sowie die sehr gute Lichtbeständigkeit und die gute Löslichkeit in polaren Lösungsmitteln.

Ganz überraschend konnte durch die Verwendung bestimmter Oxoporphyrin-Metallkomplexe als Aufzeichnungsschicht ein optisches Aufzeichnungsmedium bereitgestellt werden, dessen Eigenschaften erstaunlich besser sind, als bei bisher bekannten Aufzeichnungsmedien.

Die Erfindung betrifft demnach ein optisches Aufzeichnungsmedium, enthaltend ein Substrat, eine reflektierende Schicht und eine Aufzeichnungsschicht, dadurch gekennzeichnet, dass diese Aufzeichnungsschicht im wesentlichen aus einem oder mehreren Farbstoffen der Formel (I) oder Chlorierungs- oder Bromierungsprodukten davon besteht, 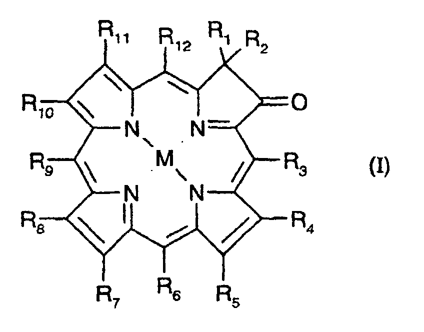 worin R₁ und R₂ unabhängig voneinander für unsubstituiertes oder mit OR₁₃, NR₁₄R₁₅, COOR₁₃, CONR₁₄R₁₅ oder CN substituiertes C₁-C₈Alkyl oder C₂-C₈Alkenyl stehen;
R₃, R₆, R₉ und R₁₂ unabhängig voneinander für Wasserstoff, Halogen, CN, CHO, C₁-C₈Alkyl oder unsubstituiertes oder mit Halogen, NO₂, C₁-C₈Alkyl, OR₁₃, SR₁₃, NR₁₄R₁₅, COOR₁₃, CONR₁₄R₁₅ oder CN einfach oder mehrfach substituiertes C₆-C₁₄Aryl stehen;
R₄, R₅, R₇, R₈, R₁₀ und R₁₁ unabhängig voneinander für Wasserstoff, Halogen, NO₂, CHO, COOR₁₃, CONR₁₄R₁₅, CN oder für unsubstituiertes oder mit OR₁₃, NR₁₄R₁₅, COOR₁₃, CONR₁₄R₁₅ oder CN substituiertes C₁-C₆Alkyl oder C₂-C₈Alkenyl stehen,
oder unabhängig voneinander ein oder mehrere Paare R₄ und R₅, R₇ und R₈ und/oder R₁₀ und R₁₁ unsubstituiertes oder mit Halogen, NO₂, C₁-C₈Alkyl, OR₁₃, SR₁₃, NR₁₄R₁₅, COOR₁₃, CONR₁₄R₁₅ oder CN einfach oder mehrfach substituiertes 1,4-Buta-1,3-dienylen, oder unsubstituiertes oder mit C₁-C₈Alkyl, OR₁₃, NR₁₄R₁₅, COOR₁₃, CONR₁₄R₁₅ oder CN einfach oder mehrfach substituiertes 1,3-Propylen, 1,4-Butylen oder 2-Buten-1,4-ylen sind, so dass gegebenenfalls mit der gemeinsamen C-C- oder C=C-Gruppe ein fünfgliedriger oder sechsgliedriger Ring gebildet wird;
wobei R₁₃, R₁₄ und R₁₅ unabhängig voneinander für Wasserstoff, C₁-C₂₀Alkyl, C₂-C₂₀Alkenyl, C₂-C₂₀Alkinyl, C₆-C₁₄Aryl oder C₇-C₁₈Aralkyl stehen,
oder NR₁₄R₁₅ einen fünf- oder sechsgliedrigen, gegebenenfalls einen weiteren N oder O-Atom enthaltenden Heterozyklus bedeutet, welcher einfach oder mehrfach mit C₁-C₈Alkyl substituiert sein kann;
und M für H₂ oder ein divalentes Metallatom, Oxometall, Halogenometall oder Hydroxymetall steht,
wobei das divalente Oxometall, Halogenometall oder Hydroxymetall zusätzlich an einem, und das divalentes Metallatom zusätzlich an einem oder zwei gegebenenfalls voneinander unabhängigen neutralen Molekülen koordiniert sein kann, welche mindestens ein Heteroatom, ausgewählt aus der Gruppe bestehend aus N, O und S, enthalten.

Alkyl, Alkenyl oder Alkinyl, beispielsweise C₁-C₂₀Alkyl, C₂-C₂₀Alkenyl oder C₂-C₂₀Alkinyl, kann geradkettig, verzweigt, monozyclisch oder polyzyclisch sein. C₁-C₆Alkyl ist daher zum Beispiel Methyl, Ethyl, n-Propyl, Isopropyl, n-Butyl, sec.-Butyl, Isobutyl, tert.-Butyl, Cyclobutyl, n-Pentyl, 2-Pentyl, 3-Pentyl, 2,2-Dimethylpropyl, Cyclopentyl, n-Hexyl, Cyclohexyl, C₁-C₂₀Alkyl darüber hinaus zum Beispiel n-Octyl, 1,1,3,3-Tetramethylbutyl, 2-Ethylhexyl, Nonyl, Trimethylcyclohexyl, Decyl, Menthyl, Thujyl, Bomyl, 1-Adamantyl, 2-Adamantyl, Dodecyl, Tetradecyl, Hexadecyl, Octadecyl oder Eicosyl.

C₂-C₂₀Alkenyl ist C₂-C₂₀Alkyl, welches ein- oder mehrfach ungesättigt ist, wobei zwei oder mehr Doppelbindungen gegebenenfalls isoliert oder konjugiert sein können, zum Beispiel Vinyl, Allyl, 2-Propen-2-yl, 2-Buten-1-yl, 3-Buten-1-yl, 1,3-Butadien-2-yl, 2-Cyclobuten-1-yl, 2-Penten-1-yl, 3-Penten-2-yl, 2-Methyl-1-buten-3-yl, 2-Methyl-3-buten-2-yl, 3-Methyl-2-buten-1-yl, 1,4-Pentadien-3-yl, 2-Cyclopenten-1-yl, 2-Cyclohexen-1-yl, 3-Cyclohexen-1-yl, 2,4-Cyclohexadien-1-yl, 1-*p*-Menthen-8-yl, 4(10)-Thujen-10-yl, 2-Norbomen-1-yl, 2,5-Norbomadien-1-yl, 7,7-Dimethyl-2,4-norcaradien-3-yl oder die verschiedenen Isomeren von Hexenyl, Octenyl, Nonenyl, Decenyl, Dodecenyl, Tetradecenyl, Hexadecenyl, Octadecenyl, Eicosenyl, Heneicosenyl, Docosenyl, Tetracosenyl, Hexadienyl, Octadienyl, Nonadienyl, Decadienyl, Dodecadienyl, Tetradecadienyl, Hexadecadienyl, Octadecadienyl oder Eicosadienyl.

C₂-C₂₀Alkinyl ist C₂-C₂₀Alkyl oder C₂-C₂₀Alkenyl, welches ein- oder mehrfach doppelt ungesättigt ist, wobei die Dreifachbindungen gegebenenfalls isoliert oder unter sich oder mit Doppelbindungen konjugiert sein können, zum Beispiel 1-Propin-3-yl, 1-Butin-4-yl, 1-Pentin-5-yl, 2-Methyl-3-butin-2-yl, 1,4-Pentadiin-3-yl, 1,3-Pentadiin-5-yl, 1-Hexin-6-yl, cis-3-Methyl-2-penten-4-in-1-yl, trans-3-Methyl-2-penten-4-in-1-yl, 1,3-Hexadiin-5-yl, 1-Octin-8-yl, 1-Nonin-9-yl, 1-Decin-10-yl oder 1-Tetracosin-24-yl.

C₇-C₁₈Aralkyl ist zum Beispiel Benzyl, 2-Benzyl-2-propyl, β-Phenyl-ethyl, 9-Fluorenyl, α,α-Dimethylbenzyl, ω-Phenyl-butyl, ω-Phenyl-octyl, ω-Phenyl-dodecyl oder 3-Methyl-5-(1',1',3',3'-tetramethyl)butyl-benzyl. C₇-C₂₄Aralkyl kann darüberhinaus beispielsweise auch 2,4,6-Tri-tert.-butyl-benzyl oder 1-(3,5-Dibenzyl-phenyl)-3-methyl-2-propyl bedeuten. Ist C₇-C₁₈Aralkyl substituiert, so können sowohl der Alkyl- als auch am Aryl-Teil der AralkylGruppe substituiert sein, wobei letztere Alternative bevorzugt ist.

C₆-C₁₈Aryl ist zum Beispiel Phenyl, Naphthyl, Biphenylyl, 2-Fluorenyl, Phenanthryl, Anthracenyl oder Terphenylyl.

Divalente Metallatome sind beispielsweise Cu(II), Zn(II), Fe(II), Ni(II), Ru(II), Rh(II), Pd(II), Pt(II), Mn(II), Mg(II), Be(II), Ca(II), Ba(II), Cd(II), Hg(II), Sn(II), Co(II) oder Pb(II). Divalente Oxometalle sind beispielsweise V(IV)O, Mn(IV)O oder Ti(IV)O. Ein divalentes Halogenometall ist beispielsweise Fe(III)Cl. Ein divalentes Hydroxymetall ist beispielsweise Al(III)OH.

Koordinierte neutrale Moleküle sind gegebenenfalls übliche, für Übergangsmetalle geeignete Liganden, zum Beispiel Wasser, Amine, Ammoniak, Hydrazin, Triethylamin, Kohlenstoffmonoxid, Stickstoffmonoxid, Aceton oder heteroaromatische Verbindungen wie beispielsweise Pyridin, Chinolin, Furan, Pyrrol, Thiophen oder Methylimidazol.

Halogen ist Chlor, Brom, Fluor oder Jod, bevorzugt Chlor oder Brom.

Unter Chlorierungs- und Bromierungsprodukten von Farbstoffen der Formel (I) werden die Umsetzungsprodukte von Farbstoffen der Formel (I) mit üblichen Chlorierungs- und Bromierungsmitteln verstanden. Übliche Chlorierungs- und Bromierungsmittel sind zum Beispiel Chlor, Brom, Hypochloride und Hypobromide, N-Chlor- und N-Brom-succinimid, Phosphorpentachlorid sowie 1,3-Dibrom-5,5-dimethyl-hydantoin. Die für alle üblichen Chlorierungs- und Bromierungsmittel zweckmässigen Chlorierungs- oder Bromierungsbedingungen, sowie gegebenenfalls geeignete Katalysatoren, sind ebenfalls wohlbekannt.

Die genaue Struktur der Chlorierungs- und Bromierungsprodukte von Farbstoffen der Formel (I) ist noch nicht mit Sicherheit bekannt. Aufgrund der zur Verfügung stehenden Daten wird angenommen, dass es sich nicht um Substitutions-, sondem um Additionsprodukte von Chlor oder Brom an die Struktur der Formel (I) handelt.

Bevorzugt sind R₁ und R₂ unabhängig voneinander unsubstituiertes oder mit COOR₁₃, CONR₁₄R₁₅ oder CN substituiertes C₁-C₈Alkyl.

Bevorzugt sind R₃, R₆, R₉ und R₁₂ unabhängig voneinander Wasserstoff, Halogen, CN, CHO, C₁-C₈Alkyl oder unsubstituiertes oder mit Halogen, NO₂, C₁-C₈Alkyl, OR₁₃, SR₁₃ oder COOR₁₃ substituiertes Phenyl.

Bevorzugt sind R₄, R₅, R₇, R₈, R₁₀ und R₁₁ unabhängig voneinander Wasserstoff oder C₁-C₈Alkyl.

Bevorzugt ist das divalente Metallatom, Oxometall, Halogenometall oder Hydroxymetall an keinem zusätzlichen neutralen Molekül koordiniert. Bevorzugt steht M für H₂, Cu(II), Zn(II), Ni(II), Pd(II), Pt(II), Mn(II) oder Co(II).

Verwendet man anstelle einer Verbindung der Formel (I) eine chlorierte oder bromierte Verbindung der Formel (I), so enthält diese gegebenenfalls zweckmässig höchstens 8, bevorzugt höchstens 4 Chlor- bzw. Bromatome.

Besonders bevorzugt sind Verbindungen der Formel (I), worin R₁ und R₂ unabhängig voneinander für Methyl oder Ethyl; R₃, R₆, R₉ und R₁₂ für Wasserstoff; R₄, R₅, R₇, R₈, R₁₀ und R₁₁ unabhängig voneinander für unsubstituiertes oder in ω-Stellung mit COOH oder COOC₁-C₂₀Alkyl substituiertes geradkettiges C₁-C₆Alkyl, insbesondere (CH₂)₂COOC₁-C₂₀Alkyl, und M für H₂, Pt oder Pd steht.

Ganz besonders bevorzugt sind die Verbindungen der Formel (II), 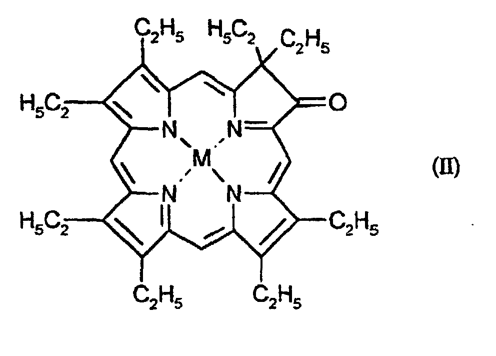 worin M die für Formel (I) angegebene Definition besitzt, sowie die Bromierungsprodukte davon, welche zwei oder vier Bromatome enthalten.

Die Verbindungen der Formeln (I) und (II) sind bekannte Verbindungen, welche wie beispielsweise in Anal. Chem. 67, 4112 (1995) beschrieben vor allem in der Sensorik verwendet werden. Sollten einige davon noch neu sein, so können sie analog zu den bekannten Verbindungen nach an sich bekannten Methoden hergestellt werden, zum Beispiel nach denjenigen, welche in J. Heterocyclic Chem. 22, 1739 (1985), J. Org. Chem. 57, 4820 (1992), Photochemistry and Photobiology 55, 133 (1992), Inorg. Chem. 34, 1333 (1995) oder irgend eine andere der zahlreichen, dem Fachmann bekannten Publikationen auf diesem Gebiet offenbart sind. Gänzlich überraschend besitzen sie eine besonders vorteilhafte, schmale Absorptionskurve im Festzustand.

Die erfindungsgemäss verwendeten Oxoporphyrinfarbstoffe weisen an der längerwelligen Flanke der Absorptionsbande einen hohen Brechungsindex auf, welcher bevorzugt einen Spitzenwert von über 1,8 in den Bereichen von 400 bis 500 nm und von 600 bis 700 nm erreicht, wodurch ein Medium mit hoher Reflektivität sowie hoher Empfindlichkeit und guter Wiedergabecharakteristik im erwünschten Spektralbereich ermöglicht wird. Es ist zudem unnötig, einen weiteren Farbstoff der Aufzeichnungsschicht beizumischen, so dass eine sehr gute Lichtechtheit erreicht wird.

Das Substrat, welches als Träger für die darauf angebrachten Schichten fungiert, ist zweckmässig semi-transparent (T ≥ 10%) oder bevorzugt transparent (T ≥ 90%). Der Träger kann eine Dicke von 0,01 bis 10 mm, bevorzugt von 0,1 bis 5 mm aufweisen.

Die Aufzeichnungsschicht ist bevorzugt zwischen dem transparenten Substrat und der reflektierenden Schicht angebracht. Die Dicke der Aufzeichnungsschicht beträgt von 10 bis 1000 nm, bevorzugt von 50 bis 500 nm, besonders bevorzugt um zirka 100 nm, beispielsweise von 80 bis 150 nm. Die Absorption der Aufzeichnungsschicht beträgt dabei beim Absorptionsmaximum typisch von 0,1 bis 1,0. Ganz besonders bevorzugt wird die Schichtdicke abhängig von den jeweiligen Brechungsindizes im nichtbeschrifteten, beziehungsweise im beschrifteten Zustand bei der Lesewellenlänge auf bekannte Weise so gewählt, dass im nichtbeschrifteten Zustand eine konstruktive Interferenz und im beschrifteten Zustand dagegen eine destruktive Interferenz resultieren, oder umgekehrt.

Die reflektierende Schicht, deren Dicke von 10 bis 150 nm betragen kann, hat bevorzugt eine hohe Reflektivität (R ≥ 70%), gekoppelt mit einer niedrigen Transparenz (T ≤ 10%).

Die je nach Schichtaufbau oberste Schicht, zum Beispiel die Reflexionsschicht oder die Aufzeichnungsschicht, wird zweckmässig zusätzlich mit einer Schutzschicht versehen, welche eine Dicke von 0,1 bis 1000 µm, bevorzugt 0,1 bis 50 µm und besonders bevorzugt 0,5 bis 15 µm aufweisen kann. Diese Schutzschicht kann gegebenenfalls auch als Haftvermittler für eine darauf angebrachte, zweite Substratschicht dienen, welche bevorzugt von 0,1 bis 5 mm dick ist und aus dem gleichen Material wie das Trägersubstrat besteht.

Die Reflektivität des gesamten Aufzeichnungsmediums beträgt bevorzugt mindestens 60%.

Dank der Verwendung von Farbstoffen der Formel (I) weisen die erfindungsgemässen Aufzeichnungsmedien vorteilhaft homogene, amorphe und streuungsarme Aufzeichnungsschichten auf, deren Brechungsindexkante überraschend auch in der Festphase besonders steil ist. Weitere Vorteile sind die hohe Lichtstabilität am Tageslicht bei gleichzeitiger hoher Empfindlichkeit unter Laserstrahlung hoher Leistungsdichte, die gleichmässige Schriftbreite sowie die gute Thermo- und Lagerstabilität.

Geeignete Substrate sind zum Beispiel Gläser, Mineralien, Keramiken und duroplastische oder thermoplastische Kunststoffe. Bevorzugte Träger sind Gläser und homo- oder copolymere Kunststoffe. Geeignete Kunststoffe sind zum Beispiel thermoplastische Polycarbonate, Polyamide, Polyester, Polyacrylate und Polymethacrylate, Polyurethane, Polyolefine, Polyvinylchlorid, Polyvinylidenfluorid, Polyimide, duroplastische Polyester und Epoxidharze. Das Substrat kann in reiner Form sein oder auch übliche Additive enthalten, beispielsweise UV-Absorber oder Farbstoffe, wie zum Beispiel in JP 04/167 239 als Lichtschutz für die Aufzeichnungsschicht vorgeschlagen wird. In letzterem Fall ist es gegebenenfalls zweckmässig, dass der zum Trägersubstrat zugesetzte Farbstoff ein relativ zum Farbstoff der Aufzeichnungsschicht um mindestens 10 nm, bevorzugt um mindestens 20 nm hypsochrom verschobenes Absorptionsmaximum aufweist.

Zweckmässig ist das Substrat in mindestens einem Teil des Bereichs von 600 bis 700 nm transparent, so dass es für mindestens 90% des darauf fallenden Lichtes der Beschriftungs- oder Auslesewellenlänge durchlässig ist. Das Substrat weist bevorzugt auf der Beschichtungsseite eine spiralförmige Führungsrille auf, mit einer Rillentiefe von 50 bis 500 nm, einer Rillenbreite von 0,2 bis 0,8 µm und einem Abstand zwischen 2 Windungen von 0,4 bis 1,6 µm, besonders bevorzugt mit einer Rillentiefe von 100 bis 200 nm, einer Rillenbreite von 0,3 µm und einem Abstand zwischen 2 Windungen von 0,6 bis 0,8 µm.

Anstelle des Substrates kann auch, so wie beispielsweise in EP 392 531 beschrieben, die Aufzeichnungsschicht selbst eine Spurrille aufweisen.

Die Aufzeichnungsschicht kann ausschliesslich oder im wesentlichen aus einem oder mehreren erfindungsgemässen Oxoporphyrinfarbstoffen bestehen. Zur nochmaligen Steigerung der Beständigkeit können aber gegebenenfalls auch bekannte Stabilisatoren in üblichen Mengen zugesetzt werden, wie zum Beispiel ein in JP 04/025 493 beschriebenes Nickeldithiolat als Lichtstabilisator. Gegebenenfalls können auch zusätzliche Farbstoffe zugesetzt werden, deren Menge jedoch zweckmässig höchstens 50 Gew.-%, bevorzugt höchstens 10 Gew.-%, bezogen auf die Aufzeichnungsschicht, beträgt. Da die Aufzeichnungsschicht im wesentlichen aus einem Farbstoff der Formel (I) bestehen soll, ist es zweckmässig, dass der gegebenenfalls zugesetzte Farbstoff ein relativ zum Farbstoff der Formel (I) hypsochrom verschobenes Absorptionsmaximum aufweist, und dass die Menge des zugesetzten Farbstoffes so klein gehalten wird, dass der Anteil des letzteren an der Gesamtabsorption der Aufzeichnungsschicht im Bereich von 600 bis 700 nm höchstens 20%, bevorzugt höchstens 10% beträgt. Besonders bevorzugt wird jedoch kein zusätzlicher Farbstoff zugesetzt.

Als reflektierendes Material für die Reflexionsschicht eignen sich besonders Metalle, welche die zur Aufzeichnung und Wiedergabe verwendete Laserstrahlung gut reflektieren, zum Beispiel die Metalle der dritten, vierten und fünften Hauptgruppe und der Nebengruppen des periodischen Systems der chemischen Elemente. Besonders geeignet sind Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt und die Lanthanidenmetalle Ce, Pr, Nd, Pm, Sm, Eu, Gd, Tb, Dy, Ho, Er, Tm, Yb und Lu, sowie deren Legierungen. Besonders bevorzugt ist aus Gründen der hohen Reflektivität und leichten Herstellbarkeit eine Reflexionsschicht aus Aluminium, Silber, Kupfer, Gold oder deren Legierungen.

Als Material für die Schutzschicht eignen sich hauptsächlich Kunststoffe, die in dünner Schicht entweder direkt oder mit Hilfe von Haftschichten auf den Träger oder die oberste Schicht aufgetragen sind. Man wählt zweckmässig mechanisch und thermisch stabile Kunststoffe mit guten Oberflächeneigenschaften, die noch modifiziert, zum Beispiel beschrieben werden können. Es kann sich sowohl um duroplastische wie auch um thermoplastische Kunststoffe handeln. Bevorzugt sind strahlungsgehärtete (zum Beispiel mit UV-Strahlung) Schutzschichten, die besonders einfach und wirtschaftlich herstellbar sind. Strahlungshärtbare Materialien sind in grosser Vielzahl bekannt. Beispiele für strahlungshärtbare Monomere und Oligomere sind Acrylate und Methacrylate von Diolen, Triolen und Tetrolen, Polyimide aus aromatischen Tetracarbonsäuren und aromatischen Diaminen mit C₁-C₄Alkylgruppen in mindestens zwei Orthostellungen der Aminogruppen, und Oligomere mit Dialkyl-, zum Beispiel Dimethylmaleinimidylgruppen.

Die erfindungsgemässen Aufzeichnungsmedien können auch zusätzliche Schichten aufweisen, wie zum Beispiel Interferenzschichten. Es ist auch möglich, Aufzeichnungsmedien mit mehreren (zum Beispiel zwei) Aufzeichnungsschichten aufzubauen. Der Aufbau und die Verwendung solcher Materiale sind dem Fachmann bekannt. Bevorzugt sind gegebenenfalls Interferenzschichten, welche zwischen der Aufzeichnungsschicht und der reflektierenden Schicht und/oder zwischen der Aufzeichnungsschicht und dem Substrat angeordnet sind und aus einem dielektrischen Material bestehen, zum Beispiel wie in EP 353 393 beschrieben aus TiO₂, Si₃N₄, ZnS oder Silikonharzen.

Die erfindungsgemässen Aufzeichnungsmedien können nach an sich bekannten Verfahren hergestellt werden, wobei je nach verwendeten Materialien und deren Funktionsweise unterschiedliche Beschichtungsmethoden angewandt werden können.

Geeignete Beschichtungsverfahren sind zum Beispiel Tauchen, Giessen, Streichen, Rakeln und Schleudergiessen, sowie Aufdampfverfahren, die im Hochvakuum durchgeführt werden. Bei der Anwendung von zum Beispiel Giessverfahren werden im allgemeinen Lösungen in organischen Lösungsmitteln verwendet. Bei der Verwendung von Lösungsmitteln ist darauf zu achten, dass die verwendeten Träger gegen diese Lösungsmittel unempfindlich sind. Einen besonderen Vorteil der erfindungsgemässen Farbstoffe ist dabei, dass sie im Gegensatz zu bisherigen Farbstoffen in weniger polaren Lösungsmitteln gut löslich sind, so dass auf agressive Lösungsmittel wie beispielsweise Aceton verzichtet werden kann. Geeignete Beschichtungsverfahren und Lösungsmittel sind zum Beispiel in EP 401 791 beschrieben.

Die Aufzeichnungsschicht wird bevorzugt durch Aufschleudem einer Farbstofflösung aufgebracht, wobei insbesondere Alkohole, wie zum Beispiel 2-Methoxyethanol, Isopropanol, Isobutanol oder n-Butanol, oder bevorzugt fluorierte Alkohole, wie zum Beispiel 2,2,2-Trifluorethanol oder 2,2,3,3-Tetrafluor-1-propanol, und Gemische davon, sich als Lösungsmittel bewährt haben.

Das Aufbringen der metallischen Reflexionsschicht erfolgt bevorzugt durch Aufdampfen im Vakuum. Das aufzubringende Material wird zunächst in ein geeignetes Gefäss gefüllt, das gegebenenfalls mit einer Widerstandsheizung versehen ist, und dann in eine Vakuumkammer gesetzt. Der zu bedampfende Träger wird oberhalb des Gefässes mit dem aufzudampfenden Material in einen Halter eingesetzt. Dieser ist so konstruiert, dass der Träger gegebenenfalls rotiert (zum Beispiel mit 50 U/Min) und geheizt werden kann. Die Vakuumkammer wird auf etwa 1,3·10⁻⁵ bis 1,3·10⁻⁶ mbar evakuiert, und die Heizung wird so eingestellt, dass die Temperatur des aufzudampfenden Materials bis zu dessen Verdampfungstemperatur ansteigt. Die Verdampfung wird so lange fortgesetzt, bis die aufgedampfte Schicht die gewünschte Dicke hat. Je nach Systemaufbau wird zuerst die organische Aufzeichnungsverbindung und dann die reflektierende Schicht aufgebracht, oder es kann umgekehrt verfahren werden. Auf das Aufbringen einer reflektierenden Schicht kann gegebenenfalls verzichtet werden.

Die Sputtertechnik wird wegen der hohen Haftfähigkeit zum Träger für das Aufbringen der metallischen Reflexionsschicht besonders bevorzugt. Das aufzubringende Material (zum Beispiel Aluminium) in Form einer Platte wird als eine "Target"-Elektrode benutzt, während der Träger auf der Gegenelektrode befestigt wird. Zuerst wird die Vakuumkammer auf etwa 10⁻⁶ mbar evakuiert und dann inertes Gas, beispielweise Argon, bis zu etwa 10⁻³ mbar eingeführt. Zwischen der "Target"-Elektrode und der Gegenelektrode wird eine hohe Gleichoder Radiofrequenz-Spannung von mehreren kV, gegebenenfalls unter Verwendung von Permanentmagneten ("Magnetron-Sputtering"), angelegt, um Ar⁺-Plasma zu erzeugen. Die durch die Ar⁺-Ionen von der "Target"-Elektrode gesputterten (herausgeschlagenen) Metallteilchen werden auf dem Substrat gleichmässig und fest deponiert. Die Beschichtung erfolgt innerhalb von einigen 10 Sekunden bis mehreren Minuten je nach Targetmaterialien, Sputtermethode und Sputterbedingungen. Diese Technik ist in Fachbüchem ausführlich beschrieben (z.B. J.L. Vossen und W. Kern, "Thin Film Processes", Academic Press, 1978).

Der Aufbau des erfindungsgemässen Aufzeichnungsmediums richtet sich hauptsächlich nach der Auslesemethode; bekannte Funktionsprinzipien sind die Messung der Veränderung der Transmission oder, bevorzugt, der Reflexion.

Wenn das Aufzeichnungsmaterial gemäss der Veränderung der Reflexion aufgebaut wird, so können zum Beispiel folgende Strukturen zur Anwendung kommen: transparenter Träger/Aufzeichnungsschicht (gegebenenfalls mehrschichtig)/Reflexionsschicht und falls zweckmässig, Schutzschicht (nicht unbedingt transparent), oder Träger (nicht unbedingt transparent)/Reflexionsschicht/Aufzeichnungsschicht und falls zweckmässig transparente Schutzschicht. Im ersten Fall wird das Licht von der Trägerseite eingestrahlt, während im letzten Fall die Strahlung von der Aufzeichnungsschicht- bzw. gegebenenfalls von der Schutzschichtseite einfällt. In beiden Fällen befindet sich der Lichtdetektor auf gleicher Seite wie die Lichtquelle. Der ersterwähnte Aufbau des erfindungsgemäss zu verwendenden Aufzeichnungsmaterials ist im allgemeinen bevorzugt.

Wenn das Aufzeichnungsmaterial gemäss der Veränderung der Lichttransmission aufgebaut wird, kommt zum Beispiel folgende andere Struktur in Frage: transparenter Träger/Aufzeichnungsschicht (gegebenenfalls mehrschichtig) und, falls zweckmässig, transparente Schutzschicht. Das Licht zur Aufzeichnung sowie zum Auslesen kann entweder von der Trägerseite oder der Aufzeichnungsschicht bzw. gegebenenfalls der Schutzschichtseite eingestrahlt werden, wobei sich der Lichtdetektor in diesem Fall immer auf der Gegenseite befindet.

Geeignete Laser sind zum Beispiel handelsübliche Diodenlaser, insbesondere HalbleiterDiodenlaser, zum Beispiel He/Ne-, Kr-, GaAsAl-, InGaAIP- oder GaAs-Laserdioden einer Wellenlänge von 602, 612, 633, 635, 647, 650, 670 oder 680 nm, oder lonenlaser, zum Beispiel HeCd- oder Ar-Laser einer Wellenlänge von 442 bzw. 457 nm.

Die Aufzeichnung kann mit Hilfe eines Lichtmodulators Punkt für Punkt vorgenommen werden. Bevorzugt werden Diodenlaser verwendet, deren Strahlung auf die Aufzeichnungsschicht fokussiert wird.

Das erfindungsgemässe Verfahren ermöglicht eine Speicherung von Informationen mit hoher Zuverlässigkeit und Beständigkeit, welche sich durch eine sehr gute mechanische und thermische Stabilität sowie durch eine hohe Lichtstabilität und scharfe Randzonen auszeichnen. Besonders vorteilhaft ist das überraschend hohe Signal/Rauschverhältnis von Trägermaterial zur Informationsmarkierung, das ein einwandfreies Auslesen zulässt. Die hohe Speicherkapazität ist insbesondere im Videobereich wertvoll.

Das Auslesen der Information erfolgt durch Messung der Absorption nach dem Reflexionsverfahren oder Transmissionsverfahren unter Verwendung von Laserstrahlung, wobei es besonders vorteilhaft ist, dass Laserstrahlung der zur Aufzeichnung benutzten Wellenlänge verwendet werden kann, also auch kein zweites Lasergerät eingesetzt werden muss. In einer bevorzugten Ausführungsform erfolgt deshalb das Aufzeichnen und Auslesen der Information bei gleicher Wellenlänge. Beim Auslesen reduziert man im allgemeinen die Leistung des verwendeten Lasers gegenüber der zur Aufzeichnung verwendeten Laserstrahlung, zum Beispiel um das zehn- bis fünfzigfache. Die Informationen können beim erfindungsgemäss verwendeten Aufzeichnungsmaterial ein- oder mehrfach ausgelesen werden. Die Veränderung im Absorptionsspektrum bzw. die gespeicherte Information kann mit einem Photodetektor unter Verwendung eines energiearmen Lasers abgelesen werden.

Geeignete Photodetektoren umfassen PIN- und AV-Photodioden sowie Mikroskop-Spektrophotometer (z.B. ®UMSP80 von Carl Zeiss), welche es ermöglichen, die spektralen Veränderungen durch Transmission oder Absorption und insbesondere Reflexion zu messen.

Das erfindungsgemässe Informationen enthaltende Medium stellt insbesondere ein optisches Informationsmaterial vom WORM-Typ dar. Es kann zum Beispiel als abspielbare CD (compact disc), als Speichermaterial für Computer oder als Ausweis- und Sicherheitskarte oder für die Herstellung von diffraktiven optischen Elementen, beispielsweise Hologrammen, verwendet werden.

Ein weiterer Gegenstand der Erfindung ist daher die Verwendung des erfindungsgemässen Aufzeichnungsmediums zur optischen Aufzeichnung, Speicherung und Wiedergabe von Information. Die Aufzeichnung und die Wiedergabe erfolgen bevorzugt im Wellenlängenbereich von 400 bis 500 nm oder besonders bevorzugt von 600 bis 700 nm.

Die nachfolgenden Beispiele erläutern die Erfindung näher:

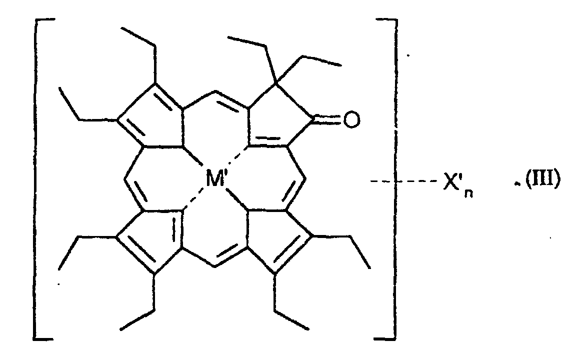

Beispiel A1 : In einem 100 ml Dreihalskolben, versehen mit Thermometer, Rührer, Septum und Stickstoffüberleitung, werden 9 mg (12 µMol) 2,2,7,8,12,13,17,18-Octaethy|-3-oxoplatin-chlorin (Formel III, M'=Pt, n=0) in 50 ml Chloroform vorgelegt und auf 3°C abgekühlt. Anschliessend wird eine Lösung von 1,9 mg (24 µMol) Brom in 1 ml Chloroform innerhalb von 5 Minuten zugetropft, wobei die Reaktionslösung sich sofort von purpur nach blau verfärbt. Nach weiteren 5 Minuten werden 10 ml Aceton zugegeben. Die organische Phase wird mit 50 ml Wasser gewaschen, über Magnesiumsulfat getrocknet, filtriert und eingedampft. Man erhält 9 mg bromiertes 2,2,7,8,12,13,17,18-Octaethyl-3-oxo-platin-chlorin (Formel III, M'=Pt, X'=Br). Das bläuliche, pulvrige Produkt ist nach Dünnschichtschromatographie (DC; Kieselgel, Hexan/Ethylacetat 6:1, R_{f} = 0,41) einheitlich.
- UV (N-Methylpyrrolidon):: λₘₐₓ = 598 nm (Ausgangsprodukt: λₘₐₓ = 589 nm);
- ¹H-NMR (CDCl₃):: 10,02 (s,1H); 9,97 (s,1H); 9,91 (s,1H); 9,21 (s,1H); 4,00-3,80 (m,12H); 2,84-2,75 (m,4H); 1,88-1,76 (m, 18H), 0,46-0,40 (m,6H).

Beispiel B1 : 0,5 Gew.-% 2,2,7,8,12,13,17,18-Octaethyl-3-oxo-palladium-chlorin (Formel III, M'=Pd, n=0) werden in Methylcyclohexan gelöst. Die Lösung wird durch einen Teflonfilter mit Porenweite 0,2 µm filtriert und auf die Oberfläche einer 1,2 mm dicken, gerillten Polycarbonatscheibe vom Durchmesser 120 mm nach dem Schleuderbeschichtungsverfahren bei 300 U/min aufgetragen. Der Überschuss an Lösung wird durch Erhöhen der Umdrehungszahl abgeschleudert. Beim Abdampfen des Lösungsmittels bleibt der Farbstoff als gleichmässige Feststoffschicht zurück. Nach dem Trocknen weist die Feststoffschicht eine Absorbance von 0,13 bei 635 nm auf. in einer Vakuumbeschichtungsapparatur wird dann eine 100 nm dicke Aluminiumschicht auf die Aufzeichnungsschicht aufgebracht. Anschliessend wird darauf eine 13 µm dicke Schutzschicht aus einem UV-härtbaren Photopolymer (SD-17, Dainippon Ink) mittels Schleuderbeschichtung aufgebracht.

Der Aufzeichnungsträger weist bei 635 nm eine Grundreflektivität von 60% auf. Mittels einer 10 mW Laserdiode der Wellenlänge 635 nm wird mit einer Leistung von 8 mW in die aktive Schicht eingeschrieben, wobei jede Marke eine Energie von 1,5 nJ/pixel erhielt. Dieser Vorgang bewirkt an beschrifteten Stellen eine Reflexionsänderung von 60% auf 30%. Mit reduzierter Leistung können die Marken wieder ausgelesen werden.

Auf einem kommerziell erhältlichen Mikroskop-Spektrophotometer (®UMSP, Carl Zeiss & Co.) wird die Reflektivätsänderung der Marken im Bereich von 450-550 nm gemessen. Die Reflektivität ändert sich von hoch zu tief mit einer Modulation von 50%.

## Patentansprüche

1. Optisches Aufzeichnungsmedium, enthaltend ein Substrat, eine reflektierende Schicht und eine Aufzeichnungsschicht, **dadurch gekennzeichnet, dass** diese Aufzeichnungsschicht im wesentlichen aus einem oder mehreren Farbstoffen der Formel (I) oder Chlorierungs- oder Bromierungsprodukten davon besteht, 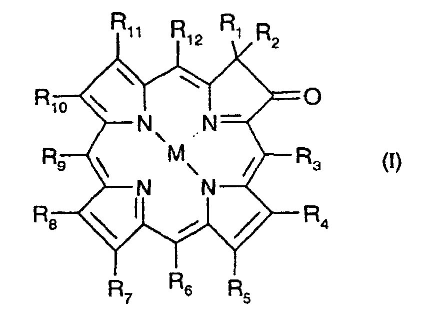 worin R₁ und R₂ unabhängig voneinander für unsubstituiertes oder mit OR₁₃, NR₁₄R₁₅, COOR₁₃, CONR₁₄R₁₅ oder CN substituiertes C₁-C₈Alkyl oder C₂-C₈Alkenyl stehen;
R₃, R₆, R₉ und R₁₂ unabhängig voneinander für Wasserstoff, Halogen, CN, CHO, C₁-C₈Alkyl oder unsubstituiertes oder mit Halogen, NO₂, C₁-C₈Alkyl, OR₁₃, SR₁₃, NR₁₄R₁₅, COOR₁₃, CONR₁₄R₁₅ oder CN einfach oder mehrfach substituiertes C₆-C₁₄Aryl stehen;
R₄, R₅, R₇, R₈, R₁₀ und R₁₁ unabhängig voneinander für Wasserstoff, Halogen, NO₂, CHO, COOR₁₃, CONR₁₄R₁₅, CN oder für unsubstituiertes oder mit OR₁₃, NR₁₄R₁₅, COOR₁₃, CONR₁₄R₁₅ oder CN substituiertes C₁-C₈Alkyl oder C₂-C₈Alkenyl stehen,
oder unabhängig voneinander ein oder mehrere Paare R₄ und R₅, R₇ und R₈ und/oder R₁₀ und R₁₁ unsubstituiertes oder mit Halogen, NO₂, C₁-C₈Alkyl, OR₁₃, SR₁₃, NR₁₄R₁₅, COOR₁₃, CONR₁₄R₁₅ oder CN einfach oder mehrfach substituiertes 1,4-Buta-1,3-dienylen, oder unsubstituiertes oder mit C₁-C₈Alkyl, OR₁₃, NR₁₄R₁₅, COOR₁₃, CONR₁₄R₁₅ oder CN einfach oder mehrfach substituiertes 1,3-Propylen, 1,4-Butylen oder 2-Buten-1,4-ylen sind, so dass gegebenenfalls mit der gemeinsamen C-C- oder C=C-Gruppe ein fünfgliedriger oder sechsgliedriger Ring gebildet wird;
wobei R₁₃, R₁₄ und R₁₅ unabhängig voneinander für Wasserstoff, C₁-C₂₀Alkyl, C₂-C₂₀Alkenyl, C₂-C₂₀Alkinyl, C₆-C₁₄Aryl oder C₇-C₁₈Aralkyl stehen,
oder NR₁₄R₁₅ einen fünf- oder sechsgliedrigen, gegebenenfalls einen weiteren N oder O-Atom enthaltenden Heterozyklus bedeutet, welcher einfach oder mehrfach mit C₁-C₈Alkyl substituiert sein kann;
und M für H₂ oder ein divalentes Metallatom, Oxometall, Halogenometall oder Hydroxymetall steht,
wobei das divalente Oxometall, Halogenometall oder Hydroxymetall zusätzlich an einem, und das divalentes Metallatom zusätzlich an einem oder zwei gegebenenfalls voneinander unabhängigen neutralen Molekülen koordiniert sein kann, welche mindestens ein Heteroatom, ausgewählt aus der Gruppe bestehend aus N, O und S, enthalten.

2. Aufzeichnungsmedium nach Anspruch 1, worin R₁ und R₂ unabhängig voneinander unsubstituiertes oder mit COOR₁₃, CONR₁₄R₁₅ oder CN substituiertes C₁-C₈Alkyl sind.

3. Aufzeichnungsmedium nach Anspruch 1, worin R₃, R₆, R₉ und R₁₂ unabhängig voneinander Wasserstoff, Halogen, CN, CHO, C₁-C₈Alkyl oder unsubstituiertes oder mit Halogen, NO₂, C₁-C₈Alkyl, OR₁₃, SR₁₃ oder COOR₁₃ substituiertes Phenyl sind.

4. Aufzeichnungsmedium nach Anspruch 1, worin R₄, R₅, R₇, R₈, R₁₀ und R₁₁ unabhängig voneinander Wasserstoff oder C₁-C₈Alkyl sind.

5. Aufzeichnungsmedium nach Anspruch 1, worin M für H₂, Cu(II), Zn(II), Ni(II), Pd(II), Pt(II), Mn(II) oder Co(II) steht.

6. Aufzeichnungsmedium nach Anspruch 1, worin R₁ und R₂ unabhängig voneinander für Methyl oder Ethyl; R₃, R₆, R₉ und R₁₂ für Wasserstoff; R₄, R₅, R₇, R₈, R₁₀ und R₁₁ unabhängig voneinander für unsubstituiertes oder in ω-Stellung mit COOH oder COOC₁-C₂₀Alkyl substituiertes geradkettiges C₁-C₆Alkyl, insbesondere (CH₂)₂COOC₁-C₂₀Alkyl, und M für H₂, Pt oder Pd steht.

7. Aufzeichnungsmedium nach Anspruch 1, worin die Verbindung der Formel (I) eine Verbindung der Formel (II), 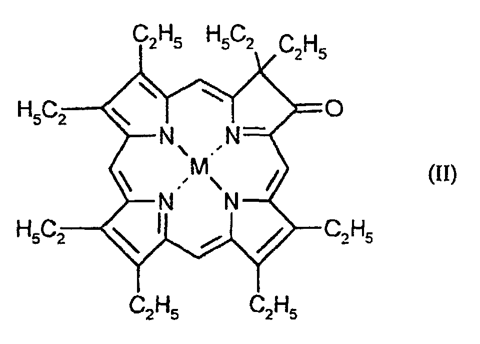 oder ein Bromierungsprodukt davon ist, welches zwei oder vier Bromatome enthält.

8. Aufzeichnungsmedium nach Anspruch 1, worin der Farbstoff einen Brechungsindex von über 1,8 in den Bereichen von 400 bis 500 nm und von 600 bis 700 nm besitzt.

9. Aufzeichnungsmedium nach Anspruch 1, worin das Substrat eine Transparenz von mindestens 90% und eine Dicke von 0,01 bis 10 mm, bevorzugt von 0,1 bis 5 mm aufweist.

10. Aufzeichnungsmedium nach Anspruch 1, worin die reflektierende Schicht aus Aluminium, Silber, Kupfer, Gold oder deren Legierungen besteht, und eine Reflektivität von mindestens 70% und eine Dicke von 10 bis 150 nm aufweist.

11. Aufzeichnungsmedium nach Anspruch 1, worin die Aufzeichnungsschicht sich zwischen dem transparenten Substrat und der reflektierenden Schicht befindet, und eine Dicke von 10 bis 1000 nm, bevorzugt von 50 bis 500 nm, besonders bevorzugt von 80 bis 150 nm aufweist.

12. Aufzeichnungsmedium nach Anspruch 1, welches mit einer zusätzlichen Schutzschicht, deren Dicke von 0,1 bis 1000 µm, bevorzugt 0,1 bis 50 um und besonders bevorzugt 0,5 bis 15 µm beträgt, versehen ist, worauf gegebenenfalls noch eine zweite Substratschicht angebracht sein kann, welche bevorzugt von 0,1 bis 5 mm dick ist und aus dem gleichen Material wie das Trägersubstrat besteht.

13. Aufzeichnungsmedium nach Anspruch 1, welches eine Reflektivität von mindestens 60% aufweist.

14. Aufzeichnungsmedium nach Anspruch 1, worin zwischen der Aufzeichnungsschicht und der reflektierenden Schicht und/oder zwischen der Aufzeichnungsschicht und dem Substrat zusätzlich mindestens eine aus einem dielektrischen Material bestehende Interferenzschicht angeordnet ist.

15. Verfahren zur optischen Aufzeichnung, Speicherung und Wiedergabe von Information, **dadurch gekennzeichnet, dass** ein Aufzeichnungsmedium nach Anspruch 1 verwendet wird.

16. Verfahren nach Anspruch 15, worin die Aufzeichnung oder die Wiedergabe im Wellenlängenbereich von 400 bis 500 nm oder von 600 bis 700 nm erfolgen.

## Claims

1. An optical recording medium comprising a substrate, a reflecting layer and a recording layer, which recording layer consists essentially of one or more than one dye of formula (I) or chlorination or bromination products thereof 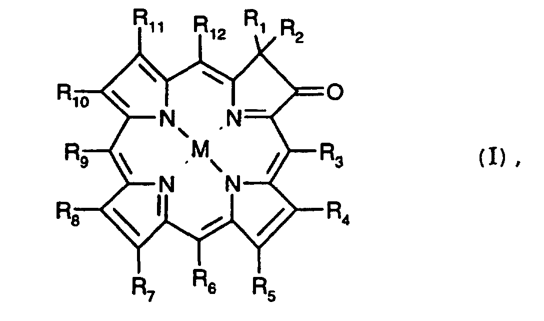 in which R₁ and R₂ are each independently of the other C₁-C₈alkyl or C₂-C₈alkenyl, each of which is unsubstituted or substituted by OR₁₃, NR₁₄R₁₅, COOR₁₃, CONR₁₄R₁₅ or CN;
R₃, R₆, R₉ and R₁₂ are each independently of one another hydrogen, halogen, CN, CHO, C₁-C₈alkyl, or C₆-C₁₄aryl which is unsubstituted or mono- or polysubstituted by halogen, NO₂, C₁-C₈alkyl, OR₁₃, SR₁₃, NR₁₄R₁₅, COOR₁₃, CONR₁₄R₁₅ or CN;
R₄, R₅, R₇, R₈, R₁₀ and R₁₁ are each independently of one another hydrogen, halogen, NO₂, CHO, COOR₁₃, CONR₁₄R₁₅, CN, or C₁-C₈alkyl or C₂-C₈alkenyl, each of which is unsubstituted or substituted by OR₁₃, NR₁₄R₁₅, COOR₁₃, CONR₁₄R₁₅ or CN,
or, each independently of one another, one or more pairs R₄ and R₅, R₇ and R₈ and/or R₁₀ and R₁₁ are 1,4-buta-1,3-dienylene which is unsubstituted or mono- or polysubstituted by halogen, NO₂, C₁-C₈alkyl, OR₁₃, SR₁₃, NR₁₄R₁₅, COOR₁₃, CONR₁₄R₁₅ or CN, or 1,3-propylene, 1,4-butylene or 2-buten-1,4-ylene, each of which is unsubstituted or mono- or polysubstituted by C₁-C₈alkyl, OR₁₃, NR₁₄R₁₅, COOR₁₃, CONR₁₄R₁₅ or CN, such that, optionally together with the shared C-C or C=C group, a five- or six-membered ring is formed;
where R₁₃, R₁₄ and R₁₅ are each independently of one another hydrogen, C₁-C₂₀alkyl, C₂-C₂₀alkenyl, C₂-C₂₀alkynyl, C₆-C₁₄aryl or C₇-C₁₈aralkyl,
or NR₁₄R₁₅ is a five- or six-membered heterocycle which may contain a further N or O atom and which can be mono- or polysubstituted by C₁-C₈alkyl;
and M is H₂ or a divalent metal atom, oxometal, halogenometal or hydroxymetal,
where the divalent oxometal, halogenometal or hydroxymetal may be additionally coordinated to one, and the divalent metal atom may additionally be coordinated to one or two, neutral molecules which are independent of or dependent on each other and which contain at least one hetero atom selected from the group consisting of N, O and S.

2. A recording medium according to claim 1, wherein R₁ and R₂ are each independently of the other C₁-C₈alkyl which is unsubstituted or substituted by COOR₁₃, CONR₁₄R₁₅ or CN.

3. A recording medium according to claim 1, wherein R₃, R₆, R₉ and R₁₂ are each independently of one another hydrogen, halogen, CN, CHO, C₁-C₈alkyl, or phenyl which is unsubstituted or substituted by halogen, NO₂, C₁-C₈alkyl, OR₁₃, SR₁₃ or COOR₁₃.

4. A recording medium according to claim 1, wherein R₄, R₅, R₇, R₈, R₁₀ and R₁₁ are each independently of one another hydrogen or C₁-C₈alkyl.

5. A recording medium according to claim 1, wherein M is H₂, Cu(II), Zn(II), Ni(II), Pd(II), Pt(II), Mn(II) or Co(II).

6. A recording medium according to claim 1, wherein R₁ and R₂ are each independently of the other methyl or ethyl; R₃, R₆, R₉ and R₁₂ are hydrogen; R₄, R₅, R₇, R₈, R₁₀ and R₁₁ are each independently of one another straight-chain C₁-C₆alkyl which is unsubstituted or substituted in ω-position by COOH or COOC₁-C₂₀alkyl, in particular (CH₂)₂COOC₁-C₂₀alkyl, and M is H₂, Pt or Pd.

7. A recording medium according to claim 1, wherein the compound of formula (I) is a compound of formula (II), 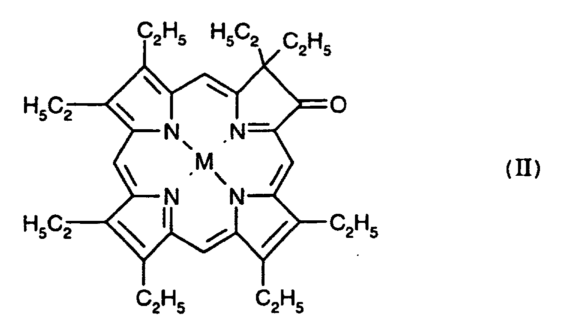 or a bromination product thereof which contains two or four bromine atoms.

8. A recording medium according to claim 1, wherein the dye has a refractive index of more than 1.8 in the ranges from 400 to 500 nm and from 600 to 700 nm.

9. A recording medium-according to claim 1, wherein the substrate has a transparency of at least 90% and a thickness of 0.01 to 10 mm, preferably of 0.1 to 5 mm.

10. A recording medium according to claim 1, wherein the reflecting layer consists of aluminium, silver, copper, gold or their alloys and has a reflectivity of at least 70% and a thickness of 10 to 150 nm.

11. A recording medium according to claim 1, wherein the recording layer is arranged between the transparent substrate and the reflecting layer and has a thickness from 10 to 1000 nm, preferably from 50 to 500 nm, particularly preferably from 80 to 150 nm.

12. A recording medium according to claim 1, which is additionally provided with a protective layer which has a thickness from 0.1 to 1000 µm, preferably from 0.1 to 50 µm and, particularly preferably, from 0.5 to 15 µm and whereon if desired a second substrate layer may be applied which is preferably from 0.1 to 5 mm thick and which consists of the same material as the support substrate.

13. A recording medium according to claim 1, which has a reflectivity of at least 60%.

14. A recording medium according to claim 1, wherein at least one interference layer consisting of a dielectric material is additionally disposed between the recording layer and the reflecting layer and/or between the recording layer and the substrate.

15. A method of optical recording, storage and reproduction of information, which comprises using a recording medium according to claim 1.

16. A method according to claim 15, wherein recording or reproduction is carried out in the wavelength range from 400 to 500 nm or-from 600 to 700 nm.

## Revendications

1. Support d'enregistrement optique, contenant un substrat, une couche réfléchissante et une couche d'enregistrement, **caractérisé en ce que** cette couche d'enregistrement est constituée essentiellement d'un ou de plusieurs colorants de formule (I) ou de produits de chloration ou de bromation de ceux-ci, 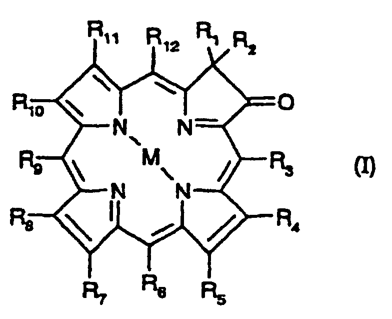 dans laquelle
R₁ et R₂ représentent indépendamment l'un de l'autre un groupe alkyle en C₁ à C₈ ou alcényle en C₂ à C₈ non substitué ou substitué avec OR₁₃, NR₁₄R₁₅, COOR₁₃, CONR₁₄R₁₅ ou CN ;
R₃, R₆, R₉ et R₁₂ représentent indépendamment les uns des autres un atome d'hydrogène, d'halogène, CN, CHO, un groupe alkyle en C₁ à C₈ ou un groupe aryle en C₆ à C₁₄ non substitué ou substitué une ou plusieurs fois avec un halogène, NO₂, un alkyle en C₁ à C₈, OR₁₃, SR₁₃, NR₁₄R₁₅, COOR₁₃, CONR₁₄R₁₅ ou CN ;
R₄, R₅, R₇, R₈, R₁₀ et R₁₁ représentent indépendamment les uns des autres un atome d'hydrogène, d'halogène, NO₂, CHO, COOR₁₃, CONR₁₄R₁₅, CN ou un groupe alkyle en C₁ à C₈ ou alcényle en C₂ à C₈ non substitué ou substitué avec OR₁₃, NR₁₄R₁₅, COOR₁₃, CONR₁₄R₁₅ ou CN,
ou indépendamment les uns des autres une ou plusieurs paires R₄ et R₅, R₇ et R₈ et/ou R₁₀ et R₁₁ sont un groupe 1,4-buta-1,3-diénylène non substitué ou substitué un ou plusieurs fois avec un halogène, NO₂, un alkyle en C₁ à C₈, OR₁₃, SR₁₃, NR₁₄R₁₅, COOR₁₃, CONR₁₄R₁₅ ou CN, ou un groupe 1,3-propylène, 1,4-butylène ou 2-butène-1,4-ylène non substitué ou substitué avec un alkyle en C₁ à C₈, OR₁₃, NR₁₄R₁₅, COOR₁₃, CONR₁₄R₁₅ ou CN, de sorte à former éventuellement avec le groupe -C-C- ou -C=C- un cycle à cinq chaînons ou à six chaînons ;
dans lequel R₁₃, R₁₄ et R₁₅ représentent indépendamment les uns des autres un atome d'hydrogène, un groupe alkyle en C₁ à C₂₀, alcényle en C₂ à C₂₀, alcynyle en C₂ à C₂₀, aryle en C₆ à C₁₄ ou aralkyle en C₇ à C₁₈,
ou NR₁₄R₁₅ représente un hétérocycle à cinq ou six chaînons, contenant éventuellement un autre atome N ou O, qui peut être substitué une ou plusieurs fois avec un alkyle en C₁ à C₈;
et M représente H₂ ou un atome métallique divalent, un oxométal, un halogénométal ou un hydroxymétal,
dans lequel l'oxométal, halogénométal ou hydroxymétal divalent peut être coordiné de plus, et l'atome métallique divalent peut être de plus coordiné à une ou deux molécules neutres indépendamment l'une de l'autre éventuellement, qui contiennent au moins un hétéroatome, choisi dans le groupe constitué de N, O et S.

2. Support d'enregistrement selon la revendication 1, dans lequel R₁ et R₂ sont indépendamment l'un de l'autre un groupe alkyle en C₁ à C₈ non substitué ou substitué avec COOR₁₃, CONR₁₄R₁₅ ou CN.

3. Support d'enregistrement selon la revendication 1, dans lequel R₃, R₆, R₉ et R₁₂ sont indépendamment les uns des autres un atome d'hydrogène, d'halogène, CN, CHO, un groupe alkyle en C₁ à C₈ ou un groupe phényle non substitué ou substitué avec un halogène, NO₂, un alkyle en C₁ à C₈, OR₁₃, SR₁₃ ou COOR₁₃.

4. Support d'enregistrement selon la revendication 1, dans lequel R₄, R₅, R₇, R₈, R₁₀ et R₁₁ sont indépendamment les uns des autres un atome d'hydrogène ou un groupe alkyle en C₁ à C₈.

5. Support d'enregistrement selon la revendication 1, dans lequel M représente H₂, Cu(II), Zn(II), Ni(II), Pd(II), Pt(II), Mn(II) ou Co(II).

6. Support d'enregistrement selon la revendication 1, dans lequel R₁ et R₂ représentent indépendamment l'un de l'autre le méthyle ou l'éthyle ; R₃, R₆, R₉ et R₁₂ un atome d'hydrogène ; R₄, R₅, R₇, R₈, R₁₀ et R₁₁ indépendamment les uns des autres un groupe alkyle en C₁ à C₈ à chaîne linéaire non substitué ou substitué en position ω avec COOH ou COO-alkyle en C₁ à C₂₀, en particulier (CH₂)₂COO-alkyle en C₁ à C₂₀ et M représente H₂, Pt ou Pd.

7. Support d'enregistrement selon la revendication 1, dans lequel le composé de formule (I) est un composé de formule (II). 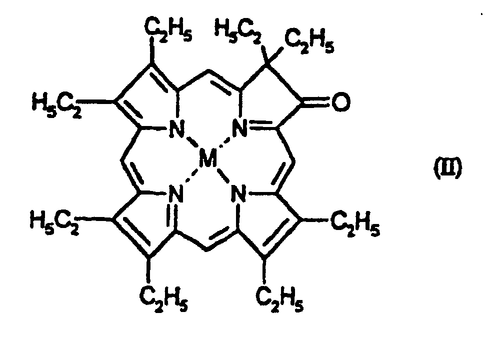 ou un produit de bromation de celui-ci, qui contient deux ou quatre atomes de brome.

8. Support d'enregistrement selon la revendication 1, dans lequel le colorant possède un indice de réfraction de plus de 1,8 dans les domaines de 400 à 500 nm et de 600 à 700 nm.

9. Support d'enregistrement selon la revendication 1, dans lequel le substrat présente une transparence d'au moins 90 % et une épaisseur de 0,01 à 10 mm, de préférence de 0,1 à 5 mm.

10. Support d'enregistrement selon la revendication 1, dans lequel la couche réfléchissante est constituée d'aluminium, d'argent, de cuivre, d'or et de leurs alliages et présente une réflectivité d'au moins 70 % et une épaisseur de 10 à 150 nm.

11. Support d'enregistrement selon la revendication 1, dans lequel la couche d'enregistrement se trouve entre le substrat transparent et la couche réfléchissante et présente une épaisseur de 10 à 1000 nm, de préférence de 50 à 500 nm, de manière particulièrement préférée de 80 à 150 nm.

12. Support d'enregistrement selon la revendication 1, qui est muni d'une couche de protection additionnelle, dont l'épaisseur s'élève à 0,1 jusqu'à 1000 µm, de préférence de 0,1 à 50 µm et mieux encore de 0,5 à 15 µm, sur laquelle on peut déposer éventuellement encore une deuxième couche de substrat, qui est de préférence de 0,1 à 5 mm et est constituée du même matériau que le substrat support.

13. Support d'enregistrement selon la revendication 1, qui présente une réflectivité d'au moins 60 %.

14. Support d'enregistrement selon la revendication 1, dans lequel entre la couche d'enregistrement et la couche réfléchissante et/ou entre la couche d'enregistrement et le substrat est disposée de plus au moins une couche d'interférence constituée d'un matériau diélectrique.

15. Procédé pour l'enregistrement optique, l'enregistrement et la restitution d'informations, **caractérisé en ce qu'**on utilise un support d'enregistrement selon la revendication 1.

16. Procédé selon la revendication 15, dans lequel on réalise l'enregistrement ou la lecture dans la gamme de longueurs d'ondes de 400 à 500 nm ou de 600 à 700 nm.
